Europäisches Patentamt

European Patent Office

Office européen des brevets

(19)

(11) **EP 0 877 778 B1**

(12) **EUROPÄISCHE PATENTSCHRIFT**

(45) Veröffentlichungstag und Bekanntmachung des Hinweises auf die Patenterteilung:
**17.05.2000 Patentblatt 2000/20**

(51) Int Cl.⁷: **C09C 1/32**, F27B 1/02, B01J 8/12

(21) Anmeldenummer: **96946180.5**

(22) Anmeldetag: **13.12.1996**

(86) Internationale Anmeldenummer:
**PCT/DE96/02374**

(87) Internationale Veröffentlichungsnummer:
**WO 97/22668 (26.06.1997 Gazette 1997/27)**

(54) **VERFAHREN UND ANORDNUNG ZUR HERSTELLUNG VON ULTRAMARIN-ROHBRAND**

PROCESS AND DEVICE FOR PRODUCING RAW BURNT ULTRAMARINE

PROCEDE ET DISPOSITIF POUR LA PRODUCTION D'OUTREMER BRUT DE CUISSON

(84) Benannte Vertragsstaaten:
**AT BE DE ES FR GB**
Benannte Erstreckungsstaaten:
**RO**

(30) Priorität: **16.12.1995 DE 19547190**

(43) Veröffentlichungstag der Anmeldung:
**18.11.1998 Patentblatt 1998/47**

(73) Patentinhaber: **Ultramarinfabrik Schindlerswerk Sächsisches Blaufarbenwerk GmbH 08318 Schindlerswerk (DE)**

(72) Erfinder: **BOCHMANN, Gerd D-08280 Albernau (DE)**

(74) Vertreter: **Helge, Reiner, Dipl.-Ing. Patentanwalt Hauptstrasse 48 08223 Falkenstein/V (DE)**

(56) Entgegenhaltungen:
DD-A- 132 069      FR-A- 877 648
US-A- 2 441 950      US-A- 2 544 694

EP 0 877 778 B1

**Beschreibung**

Die Erfindung betrifft ein Verfahren und eine Anordnung zur Herstellung von Ultramarin-Rohbrand.

Die gebräuchlichste Methode, Ultramarin zu brennen, ist der Tiegelbrand. Die Schamotte-Tiegel variieren in Form und Größe. Bewährte Formen sind zylindrische und konische Tiegel, die aus feuerfestem Ton und Schamott in ganz bestimmtem Verhältnis auf Spezialtiegelpressen hergestellt, in der üblichen Weise sorgfältig getrocknet und dann im Kammerofen bei etwa 1000 °C gebrannt werden. Die dazugehörigen Deckel mit Falz bestehen aus dem gleichen Material. Sehr wichtig ist die Einstellung der richtigen Porosität. Ein Tiegel kann 10 Brände und mehr aushalten.

Das Einfüllen der Grundbestandteile erfolgt, nachdem die Ausgangsstoffe Kaoline, Siliziumoxide, Natriumcarbonate, Schwefel und Reduktionsmittel in normalen Kugelmühlen, Flügelradkugelmühlen und Kollergängen homogen und feingemahlen sind, in die Tiegel. Auf den mit Mischung gefüllten Tiegel wird der Deckel gepreßt. Die Tiegel werden mit dem Deckel nach unten oder oben oder wechselweise in einen Kammerofen, wie in der Porzellanindustrie, gestapelt.

Es haben sich verschiedene Ofengrößen bewährt, von kleinen Öfen mit einigen 100 Tiegeln von etwa 2 bis 3 Tonnen Ausbeute bis zu den größten mit mehr als 1500 Tiegeln und 5 bis 7 Tonnen Ausbeute.

Der Brennprozeß erfolgt fast ausnahmslos in einer Stufe. Man unterscheidet hierbei drei Perioden:

1. Anheizperiode:     langsames Anheizen, je nach Größe des Ofens in etwa 10 bis 40 Stunden auf 500 °C.

2. Reaktionsperiode:     Beginn bei 500 °C, bemerkbar am Auftreten kleiner Flämmchen von brennendem Schwefel an der Deckelfuge. Von hier an verläuft die Reaktion unter Wärmeabgabe, bis die Tiegelreihen "klar" stehen; sämtlicher überschüssiger Schwefel ist jetzt verbrannt. Dauer je nach Ofen etwa 10 bis 50 Stunden. Höchsttemperatur 700 bis 800 °C.

3. Nachheizperiode:     Hier wird die nun zu einem bräunlichen Produkt gewordene Mischung langsam zu grün oxydiert, wobei der mit den Verbrennungsgasen in den Ofen gelangende überschüssige Sauerstoff durch die Poren der Tiegel eindringt. Das Ende dieser Periode stellt man durch das Ziehen einer Probe aus den glühenden Tiegeln fest. Dauer der Nachheizperiode je nach Ofenart ebenfalls 10 bis 50 Stunden bei gleicher Temperatur.

Nach Beendigung des Brennprozesses wird der Ofen sorgfältig abgedichtet. Die Umbildung des nach Beendigung der Hauptreaktion jetzt grünlichen Rohbrandes geschieht durch Reduktion des entstandenen $SO_2$, wobei sich Schwefel abscheidet und weiter durch allmähliches Eindringen von Sauerstoff in den sich abkühlenden Ofen, wobei die Porosität der Tiegelwände eine große Rolle spielt.

Nach etwa 1 bis 2 Tagen wird auch der Rauchgasschieber geschlossen und der Ofen kühlt unter Luftabschluß ab. Nach Absinken der Temperatur auf etwa 200 °C kann das Mannloch geöffnet werden und nach weiterem Abkühlen mit dem Ausnehmen begonnen werden. Die Brenn- und Abkühlungs-Periode eines Ofens beträgt je nach Größe 10 bis 20 Tage.

Für die Einstellung eines gleichmäßigen Zuges sowie für die Beseitigung der stark sauren Abgase ist ein möglichst hoher, säurefest ausgekleideter Kamin erforderlich.

Die Weiterbearbeitung des Rohbrandes erfolgt durch Waschen, Naßmahlen, Schlämmen, Trocknen und Trockenzerkleinerung.

Ultramarin-Violett und -Rot werden aus dem fertigen blauen Ultramarin gewonnen, indem man dieses entweder mit Chlor oder gasförmigem Chlorwasserstoff bei etwa 100 °C behandelt oder mit $NH_4Cl$ gemischt bis 250 °C erhitzt. Je nach Höhe der Temperatur, der Dauer der Einwirkung und der Konzentration erhält man die gewünschten Farbtöne von Violett nach Rosa, die dann noch durch Auswaschen vom gebildeten NaCl befreit werden müssen.

Auch die Behandlung mit nitrosen Gasen führt zum gleichen Ziel (D.R.P. Nr. 1).

Der Nachteil des bisher beschriebenen Verfahrens liegt darin, daß immer eine Reihe von Tiegel auf Vorrat hergestellt bzw. bereitstehen müssen. Die Herstellung des Ultramarin-Rohbrandes nimmt einen Zeitraum von mehreren Tagen (10 bis 20 Tage) ein und ist mit schwerer bis sehr schwerer körperlicher Arbeit verbunden.

Ein weiteres Verfahren zur Herstellung von Ultramarin ist der Quaderstein-Rohbrand. Hierzu wird die Ausgangsmischung zu Formlingen (Quadersteine) verpreßt und anschließend in indirekt beheizten Muffelöfen zu Ultramarin gebrannt.

Je nach Qualität des Brandes steigt die Ultramarinqualität vom Außenrand zum Kolbenkern. Bei schlechten Bränden kann das umgekehrt sein. Kein Brand gleicht dem anderen. Bedingt ist dies durch Unterschiede, beispielsweise in der Tiegelbefüllung, im Wassergehalt der Ausgangsstoffe, in der Porosität der verwendeten Tiegel, Temperaturbedingungen in den Öfen und Ofenundichtigkeiten.

Aus dem D.R.P. 149 203 ist ein Verfahren zur Herstellung von Ultramarin oder anderen aus einem Schmelz-, Glüh- oder Vergasungsprozeß hervorgehenden Produkten bekannt, bei dem Reaktionsraum und Feuerungsraum voneinander getrennt sind.

Der Ofen besteht aus einem System von Schächten mit je drei Zonen:

A - die Vorwärmzone
B - die Reaktionszone
C - die Abkühlungszone.

Die Feuerung ist entweder direkte Feuerung oder Generatorfeuerung.

Die erste Füllung geschieht von untern durch Einsetzen der Tiegel in Abteilung C und Heben in die Reaktionszone B durch die Kolben des Hebewerks. Gleich darauf wird auch die Abteilung A gefüllt und die Türen geschlossen. Die Ultramaringase ziehen durch - getrennt von den Feuerungsgasen - ab, eventuell unterstützt durch Exhaustor oder Schornstein. Nach Beendigung der Reaktion werden die Kolben gesenkt, wodurch die Tiegel mit folgendem Rohbrande an B in die Kühlzone C und die in A befindlichen, durch die Abgase vorgewärmten Tiegel in die Reaktionszone B sinken. A wird gleich wieder befüllt und hierauf die Türen geschlossen. Nach Beendigung auch dieser Charge erfolgt die Entleerung der abgekühlten Tiegel aus C. In steter Folge werden nun die Kolben wider gehoben, die Tiegel in B und A gesenkt und A wieder befüllt.

Weiterhin bekannt sind aus den DE-PS 810 054, DE-PS 813 290 und DE-PS 817 333 Verfahren zur Herstellung von Ultramarin, bei denen man eine Mischung, welche ein Aluminiumsilikat oder eine oder mehrere zur Bildung von Aluminiumsilikat bei Arbeitstemperatur befähigte Bestandteile, Schwefel und ein organisches Salz eines Alkali- oder Erdalkalimetalls enthält, unter Vermeidung von Oxydation bei einer Temperatur oberhalb 600 °C, vorzugsweise bei etwa 750 bis 800 °C, etwa 20 Minuten bis 3 Stunden behandelt und alsdann die Erhitzung unter Oxydationsbedingungen bei niedriger Temperatur, zum Beispiel etwa 450 bis 600 °C, während einer Dauer von etwa 1/2 Stunde bis 3 Stunden weiterführt und das erhaltene Erzeugnis nach Abkühlen auswäscht. Der Brennprozeß findet nach wie vor in Tiegeln im Muffel- oder Kammerofen statt.

Aus dem D.R.P. 215 708 ist ein Verfahren und eine Vorrichtung zur Herstellung von künstlichem Ultramarin bekannt. Die oxydierenden Stoffe werden anstatt mit der Masse verrührt, zu geeigneter Zeit im Mittelpunkt der Masse selbst im Inneren eines durchlochten Rohres zugeführt. Unter dem Einfluß der Temperatur geht die den Sauerstoff entwickelnde Reaktion vor sich. Nachdem dieses Rohr an seinen Platz gebracht ist, wird die Füllung der Kapsel solange fortgesetzt, bis das Rohr außen vollständig von den Rohstoffen umgeben ist. Der Boden des Rohres besitzt eine Öffnung zum Entweichenlassen von Gasen. Diese Öffnung kann zunächst mittels eines Stopfens verschlossen werden, der später durch das mittlere Rohr, das in das durchlochte Rohr eingeschoben wird, zurückgestoßen wird. Ist die Kapsel so vorbereitet und in die Muffel eingeführt, so wird der Deckel geschlossen und mit dem Heizen begonnen. Zu diesem Zeitpunkt, da die Oxydation der Masse stattfinden soll, wird der Deckel abgenommen und durch die Öffnung in das Innere des Rohres ein Rohr mit Öffnungen eingeschoben. Der Durchmesser dieser Öffnungen ist geringer als der Durchmesser des ersten Rohres. Es ist mit geeigneten, in der Hitze Sauerstoff abgebenden Stoffen befüllt und wird mittels eines Stopfens, der sich gegen die Wand der Kapsel legen kann, verschlossen. Der unter der Hitze entwickelte Sauerstoff im Inneren des Rohres strömt durch die Öffnungen der beiden Rohre in die zu oxydierende Masse und greift diese annähernd gleichzeitig in allen Teilen an, da er von der Mitte der Masse nach den äußeren Schichten hindurchströmt. Anstatt das Rohr mit Sauerstoff abgebenden Stoffen zu füllen, kann durch den Deckel und den Stopfen ein Rohr mit einem Hahn geführt werden, welches mit einer Leitung für Luft oder verdichteten Sauerstoff verbunden ist.

Der Nachteil dieser Lösung besteht darin, daß die Vorrichtung aufwendig ausgebildet ist und die feingemahlenen Rohstoffe in der Kapsel durch den Brennprozeß verhärten, so daß eine einwandfreie leichte Entleerung nicht gegeben ist.

Eine weitere Lösung ist aus der D.R.P. 219 934 bekannt, bei der zu festgesetzten Zeiten der Deckel einer Kapsel fortgenommen wird und mit Rohren oder Stangen aus feuerfestem Material, die über Öffnungen eingeführt werden, Kanäle in die Masse eingebracht werden, durch welche Luft eintreten kann.

Bekannt ist weiterhin aus dem D.R.P. 228 496 ein Ofen zur Herstellung von Ultramarin, dessen Raum für die Aufnahme des Rohmaterials im Querschnitt eine ringförmige Gestalt besitzt und in den Zylinderwänden parallel zur Ofenachse verlaufende röhrenförmige, mit dem Inneren der Retorte in Verbindung stehende Öffnungen angeordnet sind, durch die die Zuführung der Reaktionsgase stattfindet.

Gemeinsam ist allen bisherigen Verfahren die Verwendung von pulverisierten Ausgangsstoffen. Durch die Befüllung und die thermochemische Reaktion kommt es zum Verdichten der Ausgangsstoffe von der Klumpenbildung bis hin zum Verhärten/Versintern des gesamten Kapsel- bzw. Retorteninhaltes, was wiederum eine einfache leichte Entleerung nicht gewährleistet.

In der US-A-2 441 950 wird ein Verfahren zum Herstellen von Ultramarin beschrieben, bei dem die gemahlenen Ausgangsstoffe im feuchten Zustand in einer Kolben- oder Rollenbrikettierpresse brikettiert und anschließend in Tiegeln zu Rohultramarin gebrannt wird. Dieses Verfahren betrifft den Tiegelbrand.

Aus der US-A-2 544 694 ist ein Verfahren zu Herstellung von Ultramarin bekannt, bei dem die gemahlenen Ausgangsstoffe in eine Pelletiermaschine eingebracht werden und die darin hergestellten Pellets in einem Muffelofen zu Rohultramarin gebrannt werden. Das beschriebene Verfahren kann auch in Batch-Drehrohröfen oder kontinuierlichen Drehrohröfen durchgeführt werden.

In neuerer Zeit ist aus der DE 44 02 358 A1 ein Verfahren zur Herstellung von Ultramarinpigmenten bekannt geworden, das als mehrstufiges Dünnschichtverfahren zur kontinuierlichen bzw. halbkontinuierlichen Herstellung von Ultramarinpigmenten ausgebildet ist.

Das homogen gemahlene oder gemischte mehlfeine Ausgangsmaterial, bestehend aus stöchiometrischen Anteilen von Metakaolinen, $SiO_2$-reichen Stoffen, Soda, Reduktionsmittel und Schwefel wird kontinuierlich in einen Aufgabetrichter dosiert.

Der Aufgabetrichter ist als Nachmischer gestaltet, um beim kontinuierlichen Fördern das Entmischen zu verhindern und dient ebenso als Vorratsbehälter für die kontinuierliche Beschickung der nachgeschalteten Apparaturen.

Eine geeichte Zellradschleuse dosiert das homogene Ausgangsprodukt aus dem Aufgabetrichter in die bei 180 °C beheizte Rohrförderschnecke. In dieser Rohrförderschnecke entweicht die in der Mischung eingeschlossene Luft und auch Feuchtigkeit, der Schwefel schmilzt mit dem Reduktionsmittel zusammen und wird vom Metakaolin, dem $SiO_2$-reichen Stoff und dem Soda aufgesaugt. Dabei verdichtet sich die Ausgangsmischung und färbt sich braun.

Mit 180 °C gelangt das braune Produkt in die bei ca. 350 °C beheizte Trogförderschnecke. Hier findet bei ca. 220 °C die Reaktion zwischen Soda und Schwefel statt. Dabei entweicht $CO_2$ aus der Soda, Polysulfid bildet sich und $H_2S$-Spuren mit dem gebundenen Wasserstoff des Reduktionsmittels. Das $CO_2$ muß im Trogschneckenförderer quantitativ ausgetrieben werden. Vom Trogschneckenförderer wird die braune Masse bei 350 °C in eine Stopf- und Strangpresse gefördert. Der braune Produktstrang wird im Oxidkeramikrohr bis auf 700 °C oder auch 950 °C erhitzt. Das geschmolzene Natriumpolysulfid reagiert mit dem Feststoff Metakaolin in dieser Transformationsphase unter Bildung eines Raumgitters. Dabei entweichen Schwefeldampf und die Reduktions- und Reaktionsgase CO, $H_2O$ und $H_2S_{(x)}$. Der Schwefeldampf wird nach dem Stand der Technik kondensiert. Die Kondensationswärme wird zurückgewonnen. $H_2S_{(x)}$ wird mit $SO_2$ zu Schwefel oxidiert. Das Kohlenmonoxid wird in der Gasheizung nachverbrannt. Für eine Reifungszeit (Verweilzeit) des Transformationsgutes, das langsam fließt, muß Reaktionsraum bereitgestellt sein.

Danach wird mit Wärmet auschern das Transformationsgut kontinuierlich in Stufen auf 500 °C und 310 °C zurückgekühlt. Die dabei zurückgewonnene Wärme wird zum Eindampfen der später anfallenden Entsalzungslösung benutzt. Die kontinuierliche Oxydation mit $SO_2$ bei 310 °C und bis 3 bar erfolgt in einem kontinuierlichen Mischer mit einem Volumen, das eine Verweilzeit von 24 bis 48 Stunden erlaubt. Anschließend kann beim Entsalzen und der Flotation des Naßmahlgutes Rück-Schwefel II zurückgewonnen werden. Es folgt die Aufarbeitung nach dem Stand der Technik.

Der Nachteil der beschriebenen Lösung besteht darin, daß die Schneckenförderer durch die enormen Temperaturbelastungen nicht mehr einwandfrei arbeiten können. Weiterhin kommt es durch die Schmelzprozesse zu Verklebungen, die ebenfalls einer gleichmäßigen Förderung entgegenwirken. Werden für die Fördereinrichtung hochwarmfeste Werkstoffe verwendet, wird die Anlage kaum bezahlbar. Insgesamt führen die hohen Temperaturen bis 900 °C, die bei der Ultramaringewinnung benötigt werden, zu unterschiedlichen Längenausdehnung der verwendeten Materialien der Apparatur, so daß eine einwandfreie Funktionsweise nicht gegeben ist.

Aufgabe der Erfindung ist es, ein Verfahren und eine Anordnung zur Herstellung von Ultramarin-Rohbrand zu schaffen, die die Nachteile der vorbekannten Lösungen beseitigt, eine kontinuierliche Herstellung zuläßt sowie die Zeit des Brennprozesses minimiert.

Erfindungsgemäß wird die Aufgabe dadurch gelöst, daß diese Granulate und/oder Pellets einer Reaktoreinheit aufgegeben werden und durch die Schwerkraft nacheinander die Kammern des Reaktors durchlaufen, unterstützt bzw. reguliert durch die zwischen den Kammern angeordneten Absperr-, Dosier- und Fördereinrichtungen, wobei die Reaktoreinheit oder jede einzelne Kammer in vorbestimmten zeitlichen Abständen mit hochfrequenten Schwingungen beaufschlagt wird.

Als Ausgangsstoffe bei der Ultramarinherstellung werden Gemische aus

(1) Kaolinen, Soda, Schwefel und Reduktionsmitteln oder
(2) Kaolinen, Natriumpolysulfiden, Soda, Schwefel oder
(3) Natriumzeolithen geeigneter Zusammensetzung, Soda, Schwefel und Natriumpolysulfiden

verwendet.

Das granulierte oder pelletierte Ausgangsstoffgemisch durchläuft, bedingt durch die Schwerkraft, nacheinander die Kammern eines Reaktors, unterstützt bzw. reguliert durch die zwischen den Kammern angeordneten Absperr-, Dosier- und Fördereinrichtungen. Diese können zum Beispiel als Flügelzellenförderer ausgebildet sein.

Durch die thermochemische Reaktion während des Rohbrandprozesses kommt es zum "Ansintern" der Granulate bzw. Pellets, das heißt, es entstehen punktförmige versinterte Berührungspunkte leichter Bindung.

Durch die Beaufschlagung mit hochfrequenten Schwingungen werden diese Bindungen leicht aufgehoben.

Die Abführung der Reaktionsgase und Reaktionsdämpfe sowie der Eintrag von gasförmigen und/oder dampfförmigen Reaktionskomponenten erfolgt über ein innenliegendes Gasaustauschrohr.

Die Anordnung zur Durchführung des Verfahrens zur Herstellung von Ultramarin besteht aus einem Reaktor, der aus mehreren mit einem oder mehreren Absperr-, Dosier- und Förderorganen verkoppelten heiz- oder kühlbaren, rohrförmigen Kammern gebildet ist. Die einzelnen Kammern weisen in ihrem Inneren jeweils Gasaustauschrohre auf. Die innenliegenden Gasaustauschrohre bestehen aus einem porösen keramischen Material, das einen Gasaustausch von außen nach innen oder umgekehrt erlaubt. Die Kammern sind vorzugsweise rohrförmig ausgebildet. Die Kammern des Reaktors können aus Keramik, Oxidkeramik, Stahl-Oxidkeramik-Verbundmaterial oder Edelstahl bestehen. Im Kammermantel sind Heiz- und/oder Kühleinrichtungen angeordnet. Die Absperr-, Dosier- und Fördereinrichtungen sind mit einem Kühlmittel beaufschlagbar, vorzugsweise mit aus Düsen austretender Kühlluft.

Die Reaktoreinheit oder jede einzelne Kammer ist mit einer Einrichtung zur Erzeugung hochfrequenter Schwingungen versehen.

Die Erfindung soll anhand eines Ausführungsbeispieles näher erläutert werden.

Es zeigt

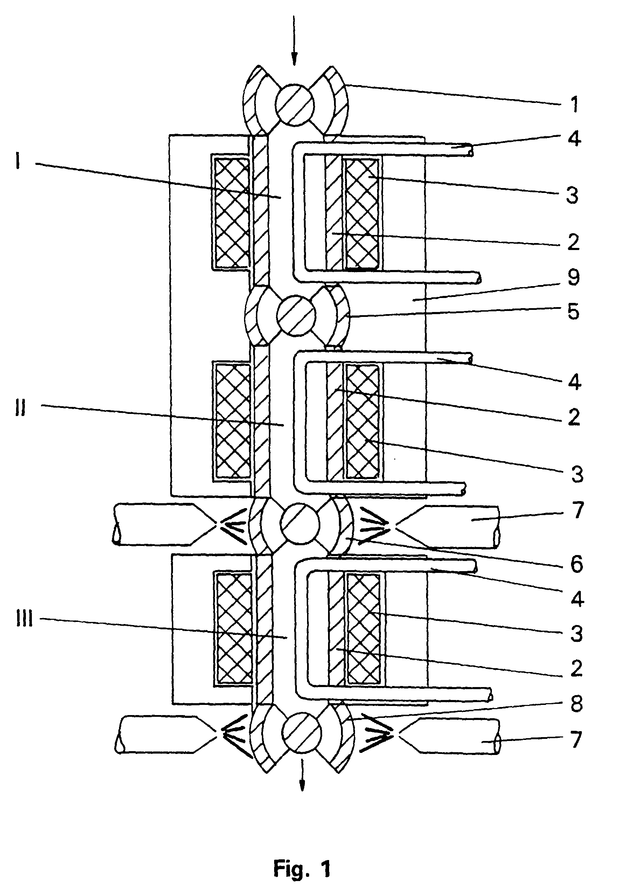

Fig. 1 -      Reaktor zur Herstellung von Ultramarin

Die entsprechenden Ausgangsstoffe werden feingemahlen und entsprechend ihren Anteilen homogen gemischt. In dem sich anschließenden Schritt werden diese pelletiert bzw. granuliert. Die granulierten und/oder pelletierten Ausgangsstoffe besitzen eine hohe Rieselfähigkeit und werden über den Flügelzellenförderer 1 in die als Reaktionsraum ausgebildete Kammer I eingebracht.

Die Kammer I besteht aus keramischem Material und ist mit einer den Kammermantel 2 umgebenden Heizeinrichtung 3 und einer die gesamte Kammer umgebende Isolierung 9 versehen. Mittig in der Kammer I ist ein Gasaustauschrohr 4 aus porösem keramischen Material angeordnet, dessen Zu- und Abgang nach außen geführt ist. Der Ausgang der Kammer I ist mit dem Eingang der Kammer II über einen Flügelzellenförderer 5 verbunden.

Die Kammer II besteht ebenfalls aus keramischem Material und ist mit einer dem Kammermantel 2 umgebenden Heizung 3 sowie einer Isolierung 9 versehen. Die Kammer II weist wiederum ein mittig angeordnetes Gasaustauschrohr 4 mit nach außen geführten Zu- und Abgang auf. Der Ausgang der Kammer II ist über den Flügelzellenförderer 6 mit dem Eingang der Kammer III verbunden.

Die Kammer III weist die gleichen konstruktiven Einzelheiten auf wie Kammer I und II. Der Flügelzellenförderer 6 weist an seiner Gehäuseaußenseite Kühlrippen auf, die von einem Kühlluftstrom umspült werden. Dazu sind auf das Gehäuse die Düsen 7 der Kühlgebläse gerichtet. Der Austrag des Rohbrandes erfolgt über den Flügelzellenförderer 8. Der Flügelzellenförderer 8 besitzt den gleichen Aufbau wie der Flügelzellenförderer 6, der sich zwischen Kammer II und III befindet.

Das Kühlen des Rohbrandes kann sowohl über den Flügelzellenförderer 8 erfolgen als auch durch Wasser in dem sich anschließenden Auffangbehälter.

Der Durchlauf der Granulate und/oder Pellets erfolgt ausnahmslos durch die einwirkende Schwerkraft mit Unterstützung durch hochfrequente Schwingungen und die zwischen den Kammern sowie am Anfang und am Ende des Reaktors angeordneten Flügelzellenförderer 1, 5, 6 und 8.

Bedingt durch die hohe Rieselfähigkeit der Granulate bzw. Pellets erfolgt der Durchfluß bzw. Ein- und Austrag ohne große Komplikationen. Die Produktion von Ultramarin-Rohbrand kann im Reaktor kontinuierlich erfolgen, wodurch sich enorme Zeiteinsparungen ergeben und eine hohe Homogenität gewährleistet wird.

Behandlung des Ausgangsproduktes (Rohmischung):

In der Kammer I erfolgt die kontinuierliche Aufheizung der Rohmischung in Form von Pellets und/oder Granulaten auf 400 °C, wobei im Falle der Ausgangsstoffe nach (1) die Reduktion von Schwefel durch Soda und Reduktionsmittel zu Natriumsulfid und weiter zu Natriumpolysulfiden ($S_3$ bis $S_5$) erfolgt. Die entstehenden Reaktionsgase werden über das innenliegende Gasaustauschrohr 4 abgeleitet:

$$Na_2CO_3 + S + 2C \rightarrow Na_2S + 3CO$$

$$Na_2S + 3S \rightarrow Na_2S_4$$

$$\overline{\phantom{Na_2CO_3 + 4S + 2C \rightarrow Na_2S_4 + 3CO}}$$

$$Na_2CO_3 + 4S + 2C \rightarrow Na_2S_4 + 3CO$$

Mittels des Flügelzellenförderers 5 wird das rieselfähige Granulat bzw. Pellets in die Kammer II überführt.

In der Kammer II erfolgt die weitere kontinuierliche Aufheizung auf bis zu 750 °C und daran anschließend die Abkühlung auf 400 °C, wobei in der sich ständig vorhandenen Schwefeldampfatmosphäre die Zeolithbildung bei gleichzeitigem Einschluß der chromophoren Gruppe erfolgt.

Die Schwefeldampfatmosphäre wird aufrechterhalten, indem der Schwefeldampf so über das poröse Gasaustauschrohr 4 abgeleitet und zu Schwefel kondensiert wird, daß entsprechend des Schwefeldampfdruckes die inertisierende Schwefeldampfatmosphäre im Gleichgewicht über den gesamten Zeitraum bestehen bleibt:

$$3(Al_2O_3 \times 2(SiO_2)) + 3Na_2CO_3 \dashrightarrow Na_6Si_6Al_6O_{24} + 3CO_2$$

$$Na_6Si_6Al_6O_{24} + Na_2S_4 \dashrightarrow Na_6Si_6Al_6O_{24} \times Na_2S_4 \Longrightarrow (Na_8Si_6Al_6O_{24}S_4)$$

$$3(Al_2O_3 \times 2(SiO_2)) + 3Na_2CO_3 + Na_2S_4 \dashrightarrow Na_6Si_6Al_6O_{24} \times Na_2S_4 + 3CO_2$$

oder

$$Na_6Si_6Al_6O_{24} + Na_2S_4 \rightarrow Na_6Si_6Al_6O_{24} \times Na_2S_4 \Rightarrow (Na_8Si_6Al_6O_{24}S_4)$$

In der Kammer III erfolgt bei Konstanthalten der Temperatur, zum Beispiel bei 400 °C, der Reaktionsmasse die Oxydation und/oder Disproportionierung der überschüssigen, im Produkt entstandenen Natriumpolysulfide sowie des im Produkt kondensierten kolloidal verteilten elementaren Schwefels mittels Sauerstoff, Wasserdampf und Schwefeldioxid. Gaseintrag und Gasabführung erfolgen wiederum über das innenliegende Gasaustauschrohr 4:

$$S + O_2 \rightarrow SO_2$$

$$3S + 2H_2O \rightarrow SO_2 + 2H_2S$$

$$Na_2S_4 + 2O_2 \rightarrow Na_2SO_4 + 3S$$

$$Na_2S_4 + SO_2 + O_2 \rightarrow Na_2SO_4 + 4S$$

Die innenliegenden Gasaustauschrohre 4 erfüllen dabei prinzipiell folgende Aufgaben:

1. Die Gasaustauschrohre 4 arbeiten als "innenliegende Schornsteine" zur Abführung von Reaktionsgasen und Reaktionsdämpfen aus dem Reaktionsgemisch. Durch geeignete Armaturen kann dabei im Über-, Normal- und/oder Unterdruckbereich gefahren werden.

2. Die Gasaustauschrohre 4 können zum Eintrag gasförmiger und/oder dampfförmiger Reaktionskomponenten in das Reaktionsgemisch verwendet werden. Durch geeignete Einrichtungen kann dabei im Über- und/oder Normaldruckbereich gefahren werden.

Behandlung der Reaktionsgase:

Die Abgase aus den Reaktionsstufen werden mit bekannten Methoden und Verfahren so behandelt, daß sie unter Einhaltung des BimSCH-Gesetzes in die Atmosphäre abgeleitet werden oder die dann entstandenen Produkte als Komponenten in das Ausgangsprodukt zurückgeführt werden:

1. Kohlenmonoxid aus der ersten Reaktionsphase wi unter Ausnutzung der entstehenden Energie verbrannt. Das entstehende Kohlendioxid wird in die Atmosphäre geleitet:

$$2CO + O_2 \rightarrow 2CO_2$$

2. Schwefeldampf aus der zweiten und dritten Reaktionsphase wird separat kondensiert und im Ausgangsprodukt wiederverwendet:

$$S_D \rightarrow S_S$$

3. Schwefeldioxid und Schwefelwasserstoff aus Phase 3 werden nach dem "Claus"-Verfahren zu Schwefel komproportioniert:

$$2H_2S + SO_2 \rightarrow 3S + H_2O$$

**Patentansprüche**

1. Verfahren zur Herstellung von Ultramarin-Rohbrand, bei dem die staubfein gemahlenen und homogen entsprechend ihren Anteilen gemischten Ausgangsstoffe granuliert und/oder pelletiert und diese einem Brennprozeß mit den Phasen Reduktion, Komplexbildung (Zeolithbildung) und Oxydation unterworfen werden,
dadurch gekennzeichnet, **daß**
diese Granulate und/oder Pellets einer Reaktoreinheit aufgegeben werden und durch die Schwerkraft nacheinander die Kammern des Reaktors durchlaufen, unterstützt bzw. reguliert durch die zwischen den Kammern angeordneten Absperr-, Dosier- und Fördereinrichtungen, wobei die Reaktoreinheit oder jede einzelne Kammer in vorbestimmten zeitlichen Abständen mit hochfrequenten Schwingungen beaufschlagt wird.

2. Verfahren nach Anspruch 1,
dadurch gekennzeichnet, **daß**
die Abführung der Reaktionsgase und Reaktionsdämpfe sowie der Eintrag gasförmiger und/oder dampfförmiger Reaktionskomponenten über ein Gasaustauschrohr erfolgt.

3. Anordnung zur Durchführung des Verfahrens nach Anspruch 1 und 2,
dadurch gekennzeichnet, **daß**
die Reaktoreinheit aus Kammern gebildet ist, die jeweils untereinander durch Förder-, Dosier- und Absperrorgane getrennt ausgeführt sind und jede Kammer mit einem Gasaustauschrohr und einer Heizeinrichtung versehen ist.

4. Anordnung nach Anspruch 3,
dadurch gekennzeichnet, **daß**
die Reaktoreinheit oder jede einzelne Kammer mit einer Einrichtung zur Erzeugung hochfrequenter Schwingungen versehen ist.

5. Anordnung nach Anspruch 3 und 4,
dadurch gekennzeichnet, **daß**
das innenliegende Gasaustauschrohr aus porösem keramischen Material besteht.

6. Anordnung nach Anspruch 3 bis 5,
dadurch gekennzeichnet, **daß**
die Kammern rohrförmig ausgebildet sind.

7. Anordnung nach Anspruch 3 bis 6,
dadurch gekennzeichnet, **daß**
die Kammern aus Keramik, Oxidkeramik, Stahl-Oxidkeramik-Verbundmaterial oder Edelstahl bestehen.

8. Anordnung nach Anspruch 3 bis 7,
dadurch gekennzeichnet, **daß**
im oder am Kammermantel Heiz- und/oder Kühleinrichtungen angeordnet sind.

**9.** Anordnung nach Anspruch 3 bis 8,
dadurch gekennzeichnet, **daß**
die Absperr-, Dosier- und Fördereinrichtungen mit einem Kühlmittel beaufschlagbar sind.

**10.** Anordnung nach Anspruch 3 bis 9,
dadurch gekennzeichnet, **daß**
innerhalb der Gehäuse der Absperr-, Dosier- und Fördereinrichtung Kühlkanäle angeordnet sind.

**Claims**

**1.** The process of manufacturing raw burnt ultramarine, in which the starting materials, which are ground fine as dust and mixed homogeneously according to their portions, are granulated and/or pelletised, then subjected to a combustion process including the phases of reduction, complexing (zeolite formation) and oxidation, is characterised by the fact **that** these granulates and/or pellets are delivered to a reactor unit, and pass through the reactor chambers in succession due to the force of gravity, supported and controlled by the shut-off, dosing and conveying devices which are arranged between the chambers, while the reactor unit or every individual chamber is exposed to high-frequency oscillations at predetermined intervals.

**2.** The process according to claim 1
is characterised by the fact **that** the reaction gases and vapours are discharged through a gas exchange pipe, and the gaseous and/or vaporous reaction components are added through a g exchange pipe, too.

**3.** The arrangement for carrying out the process according to claim 1 and 2
is characterised by the fact **tha**t the reactor unit consists of chambers which are laid out separately from each other by conveying, metering and shut-off devices. Each chamber is equipped with a gas exchange pipe and a heating system.

**4.** The arrangement according to claim 3
is characterised by the fact **that** the reactor unit or every individual chamber is equipped with a device to generate high-frequency oscillations.

**5.** The arrangement according to claim 3 and 4
is characterised by the fact **that** the internal gas exchange pipe is made from a porous ceramic material.

**6.** The arrangement to claims 3 to 5
is characterised by the fact **that** the chambers have tubular shapes.

**7.** The arrangement according to claims 3 to 6
is characterised by the fact **that** the chambers are made from ceramics, oxide ceramics, composite steel oxide ceramics or special steel.

**8.** The arrangement according to claims 3 to 7
is characterised by the fact that the heating and/or coolinging devices are installed in or on the chamber casing.

**9.** The arrangement according to claims 3 to 8
is characterised by the fact **that** a coolant can be admitted to the shut-off, dosing and conveying devices.

**10.** The arrangement according to claims 3 to 9,
is characterised by the fact **that** the cooling channels are installed inside the casings of the shut-off, dosing and conveying devices.

**Revendications**

**1.** Procédé de fabrication de cuisson brute d'outremer pour lequel les matières de base, très finement broyées et mélangées de façon homogène en respectant certaines proportions, sont granulées et / ou bouletées et où celles-ci sont soumises à un processus de cuisson comprenant les phases de réduction, de complexation (formation de zéolithes) et d'oxydation,

Caractérisé par le fait que

Ces granulats et / ou boulettes sont admis dans une unité de réacteur où par l'effet de la force gravitationnelle, ils / elles transitent en file continue à travers les chambres du réacteur, assistés et régulés par les dispositifs de blocage, de dosage et de transport installés entre les chambres, pendant que l'unité de réacteur ou bien chaque chambre individuelle est soumise à des oscillations hautes fréquences à des intervalles de temps prédéfinis.

2. Procédé défini selon la spécification 1

Caractérisé par le fait que

L'évacuation des gaz et des vapeurs de réaction, ainsi que l'admission des composants de réaction gazeux ou sous forme de vapeur, ont lieu par l'intermédiaire d'un tube d'échange des gaz.

3. Disposition pour l'accomplissement du procédé

Définie selon les spécifications 1 et 2

Caractérisée par le fait que

L'unité de réacteur est formée de plusieurs chambres disposées chacune l'une en dessous de l'autre et séparées par des organes de transport, de dosage et de blocage, et que chacune des chambres est pourvue d'un tube d'échange des gaz et d'un système de chauffage.

4. Disposition définie selon la spécification 3

Caractérisée par le fait que

L'unité de réacteur ou chacune des chambres est équipée d'un système générant des oscillations à hautes fréquences.

5. Disposition définie selon les spécifications 3 et 4

Caractérisée par le fait que

Le tube d'échange des gaz situé à l'intérieur est composé d'un matériau céramique poreux.

6. Disposition définie selon les spécifications 3 à 5

Caractérisée par le fait que

Les chambres sont conçues de forme tubulaires.

7. Disposition définie selon les spécifications 3 à 6

Caractérisée par le fait que

Les chambres sont en céramique, en céramique oxydée, en un matériau composé de céramique oxydée et d'acier ou en acier spécial.

8. Disposition définie selon les spécifications 3 à 7

Caractérisée par le fait que

Des systèmes de refroidissement et / ou de chauffage sont disposés dans ou autour de l'enveloppe des chambres.

9. Disposition définie selon les spécifications 3 à 8

Caractérisée par le fait que

Les organes de blocage, de dosage et de transport peuvent fonctionner avec un agent réfrigérant.

10. Disposition définie selon les spécifications 3 à 9

Caractérisée par le fait que

Des canaux réfrigérants sont montés à l'intérieur des boîtiers des organes de blocage, de dosage et de transport.

**Fig. 1**